# EUROPEAN PATENT APPLICATION

(11) **EP 1 382 924 A1**
(43) Date of publication of application: **21.01.2004**
(21) Application number: 03014468.7
(22) Date of filing: 01.07.2003
(51) Int. Cl.: F25D 23/08, E05C 19/16

(54) **Sealing device particularly for doors of refrigerators, freezers and the like**

(30) Priority: 18.07.2002 IT PD20020194
(71) Applicant: RONDA S.P.A., I-36010 Zané (Vicenza) (IT)
(72) Inventor: Ronda, Giovanni, 36016 Thiene, (Prov. of Vicenza) (IT)
(74) Representative: Modiano, Guido, Dr.-Ing.

(57) **Abstract**

A sealing device (10) particularly for doors of refrigerators, freezers and the like, of the type to be associated, in a corresponding seat, with a peripheral wall of a door or frame of a compartment to be sealed, comprising a plurality of longitudinally elongated sealing elements (13) connected at their ends by contoured corner elements (14), each sealing element being constituted by a contoured profile (15) made of elastomer that is coextruded with a body (16) made of magnetic material; the corner elements (14) comprising a first plate-like portion (17), in order to provide continuity between flat sealing surfaces (18) of two sealing elements (13) connected by the corner element, and second portions, for reversible connection to the ends of the sealing elements (13).

## Description

The present invention relates to a sealing device particularly for doors of refrigerators, freezers and the like.

As is known, the doors of refrigerators and freezers of the home and industrial type are normally provided with magnetic gaskets that are fixed in the peripheral region of the doors and are suitable to form a seal against the frame of the refrigerating compartment that they must close.

One known type of gasket comprises profiles made of plastics, which adapt to the mutual inclination of the facing walls and are shaped so as to provide longitudinal seats in which flat magnets are arranged which improve the seal by placing the profile in contact with the peripheral portion of the opening of the frame.

At their ends, the gaskets are mutually bonded by fusing excess portions of the profile in order to form the corner portions.

Once the gaskets are installed, however, the end joints do not allow an efficient compensation of the elongations/contractions of said gaskets as a consequence of the expansions caused by temperature variations and by gradients between the operating temperature and the temperature at which the gaskets are manufactured.

Known types of gasket do not have a very pleasant aesthetic impact, because their sealing surface is slightly undulated since it does not rest perfectly against the magnets.

Moreover, the fitting of known types of gasket is not particularly simple, since after forming the profile made of plastics it is necessary to arrange the magnets at their seat and fuse the ends of the profiles in order to form a continuous perimetric seal and then arrange the gaskets on the corresponding seats formed on the perimetric part of the door.

The aim of the present invention is to provide a sealing device particularly for doors of refrigerators, freezers and the like that has a simple structure and can be installed easily.

Within this aim, an object of the invention is to provide a sealing device that allows compensations of expansions caused by temperature variations in operation and by the temperature gradients caused by the difference between the temperature at which the sealing elements are manufactured and the temperature at which they operate.

Another object is to provide a sealing device that has a low cost.

Another object is to provide a sealing device by using known types of equipment and technologies.

This aim and these and other objects that will become better apparent hereinafter are achieved by a sealing device particularly for doors of refrigerators, freezers and the like, of the type to be associated, in a corresponding seat, with a peripheral wall of a door or frame of a compartment to be sealed, characterized in that it comprises a plurality of longitudinally elongated sealing elements connected at their ends by contoured corner elements, each sealing element being constituted by a contoured profile made of elastomer that is coextruded with a body made of magnetic material, said corner elements comprising a first plate-like portion, in order to provide continuity between the flat sealing surfaces of two sealing elements connected by said corner element, and second portions, for reversible connection to the ends of said sealing elements.

Further characteristics and advantages of the present invention will become better apparent from the following detailed description of a preferred but not exclusive embodiment thereof, illustrated by way of non-limitative example in the accompanying drawings, wherein:
Figure 1 is a perspective view of a portion of a sealing device according to the invention, in a first embodiment;
Figure 2 is a transverse sectional view of a portion of device of Figure 1;
Figure 3 is a perspective exploded view of the portion of device of Figure 2;
Figure 4 is a transverse sectional view of a component of the device shown in the preceding figures;
Figure 5 is a view of an example of application of the device shown in the preceding figures;
Figure 6 is a perspective view of a device according to the invention in a second embodiment.

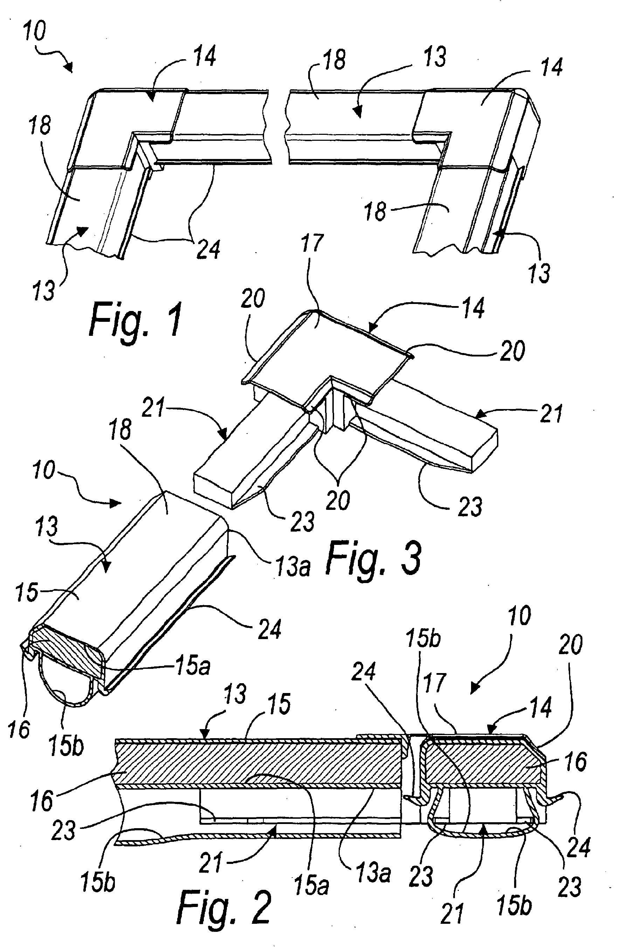

With reference to Figures 1 to 5, a sealing device particularly for doors of refrigerators, freezers and the like, according to the invention, in a first embodiment, is generally designated by the reference numeral 10.

The device 10 is of the type to be associated, in a corresponding seat 11, with a peripheral wall 12 of a door or frame of a compartment to be sealed, which is not shown for the sake of simplicity.

The device 10 comprises a plurality of sealing elements, generally designated by the reference numeral 13, which are longitudinally elongated and are connected at their ends by contoured corner elements generally designated by the reference numeral 14.

Each sealing element 13 is constituted by a contoured profile 15 made of elastomer, which is coextruded with a body 16 made of magnetic material.

The corner elements 14 comprise a first plate-like portion 17, for providing continuity between the flat sealing surfaces 18 of two sealing elements 13 connected by the corner element 14, and second portions, described in greater detail hereinafter, for reversible connection to the ends 13a of the sealing elements 13.

Each sealing element 13 comprises, as mentioned, a contoured profile 15 made of elastomer, which in turn comprises a tubular portion 15a in which a body 16 made of magnetic material is coextruded.

The tubular portion 15a forms a flat surface 18 that is suitable to provide the seal.

Lateral wings 20 protrude from the first portion 17 of the corner elements 14 and are suitable to form cradle-like seats for the ends 13a of two consecutive sealing elements 13, which are arranged with a predefined mutual angular arrangement.

The first portion 17 lies, for a predefined extent, above and adjacent to the sealing surfaces 18 of the ends 13a of two sealing elements 13 connected by the comer element 14.

In the embodiment shown in Figures 1 to 5, the device 10 comprises corner elements 14 whose second portion is constituted by axial tabs 21 that protrude in a cantilevered fashion from a body 22 that lies below the first portion 17.

The axial tabs 21 are inserted with slight interference within hollow portions 15b of the contoured profile 15, which lie below the tubular portion 15a.

In the active configuration, the tubular portion 15a, inside which the body 16 made of magnetic material is coextruded, is arranged between the first portion 17 and the axial tabs 21.

The axial tabs 21 have a substantially prism-like contour, with longitudinal wings 23 that are suitable to undergo elastic deformation and to act with slight interference within the corresponding hollow portions 15b of the ends 13a of the sealing elements 13.

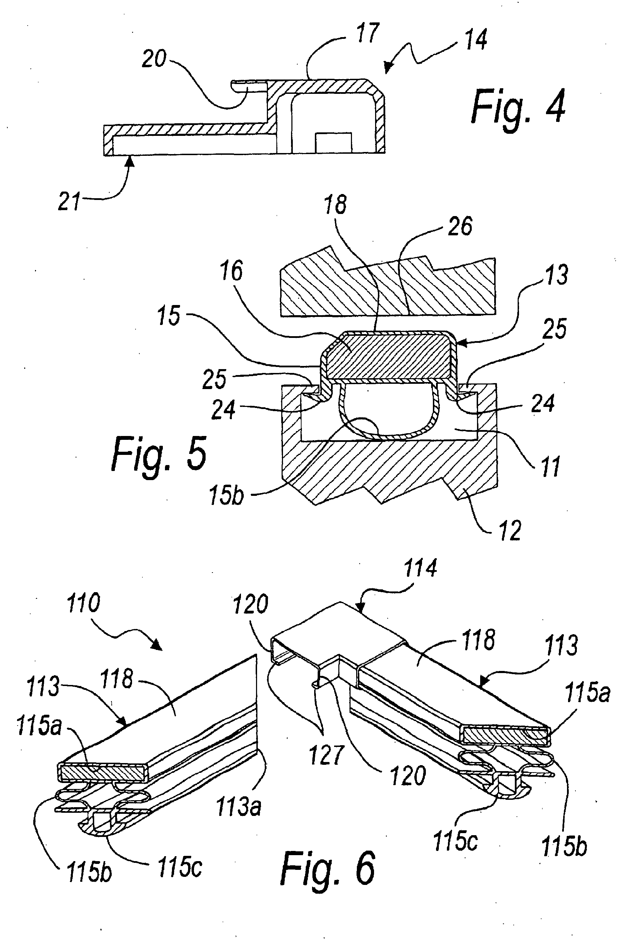

In practice, the axial tabs 21 and the first portion 17 allow the sealing elements 13 to move only in the direction of their longitudinal extension, possibly allowing small adjustments in order to make the sealing surfaces 18 adhere to an opposite wall 26, as shown in Figure 5.

In this case, the sealing element 13 comprises a tubular portion 15a, inside which a substantially prism-like body 16 made of magnetic material is coextruded, and from which lateral longitudinal protrusions 24 protrude which lie opposite the sealing surfaces 18 and form abutments for corresponding recesses 25 formed along the inner faces of a corresponding longitudinal seat 11, and a hollow portion 15b that is suitable to provide an elastic contact for the sealing element 13 against the bottom of the seat 11.

In this case, the sealing elements 13 and the corresponding corner elements 14 float on the seat 11, so as to allow to adapt to the relative inclination of the peripheral wall 12 of the door with respect to the wall 26 of the frame.

Figure 6 illustrates a device according to the invention in a second embodiment, generally designated by the reference numeral 110.

A contoured comer element 114 comprises a first portion 117, from which lateral wings 120 protrude which are suitable to form a cradle-like seat for ends 113a of two consecutive sealing elements 113 arranged with a predefined mutual angular arrangement.

In this case, the second portions of the comer element 114 are constituted by longitudinal tabs 127, which protrude from the lateral wings 120 and are suitable to form a substantially C-shaped cross-section of the corner element 114, within which the tubular portions 115a of the ends 113a of the sealing elements 113 are inserted with minimal play in a longitudinal direction.

In practice, the sealing elements 113, in view of the particular transverse contour of the comer elements 114, can only slide longitudinally.

In this case, the sealing elements 113 comprise a tubular portion 115a from which a hollow portion 115b, suitable to form an elastic concertina element, and a coupling portion 115c, suitable to interlock within a longitudinal seat not shown for the sake of simplicity, protrude in succession opposite the flat sealing surface 118.

In practice, the coupling portion 115c is bayonet-shaped and enters by elastic deformation the corresponding longitudinal seat, which is constituted by a slot.

In this embodiment, the ends 113a of the sealing elements 113 are mutually close, while in the previous embodiment the body 22 of the corner element 14 is interposed between the ends 13a.

In practice it has been found that the present invention has achieved the intended aim and objects.

By using sealing elements obtained by coextruding a profile made of elastomer and a body made of magnetic material, it is in fact possible to provide a magnetic gasket without the need to insert permanent magnets within elastomer profiles, to the benefit of simplicity in manufacturing and fitting.

The coextruded sealing element provides a better seal, since its sealing surface is perfectly flat.

Moreover, the corner elements allow to join the end portions of the sealing elements, ensuring the continuity of the sealing surface, allowing at the same time a compensation of the expansions caused by temperature variations and temperature gradients due to the different operating temperature and manufacturing temperature of said sealing elements.

The first portion of the corner element is thin, so that the sealing element, being made of elastomer, rests perfectly thereon without compromising the seal.

The present invention is susceptible of numerous modifications and variations, all of which are within the scope of the appended claims.

The technical details may be replaced with other technically equivalent elements.

The materials, so long as they are compatible with the contingent use, as well as the dimensions, may be any according to requirements.

The disclosures in Italian Patent Application No. PD2002A000194 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A sealing device particularly for doors of refrigerators, freezers and the like, of the type to be associated, in a corresponding seat, with a peripheral wall of a door or frame of a compartment to be sealed, **characterized in that** it comprises a plurality of longitudinally elongated sealing elements connected at their ends by contoured comer elements, each sealing element being constituted by a contoured profile made of elastomer that is coextruded with a body made of magnetic material, said corner elements comprising a first plate-like portion, in order to provide continuity between the flat sealing surfaces of two sealing elements connected by said corner element, and second portions, for reversible connection to the ends of said sealing elements.

2. The device according to claim 1, **characterized in that** each one of said sealing elements is constituted by a contoured profile made of elastomer, which comprises a tubular portion inside which said body made of magnetic material is coextruded, said tubular portion comprising a flat surface that is suitable to provide the seal.

3. The device according to claim 1, **characterized in that** lateral wings protrude from said first plate-like portion of said comer element and are suitable to form a cradle-like seat for the ends of two consecutive sealing elements, which are arranged with a predefined mutual angular arrangement, said first portion being arranged above and adjacent to the sealing surfaces of the ends of said sealing elements.

4. The device according to one or more of the preceding claims, **characterized in that** said second portion comprises axial tabs that cantilever out from a body that in turn lies below said first portion, said tabs entering with slight interference in hollow portions of said sealing elements that lie below said tubular portions, said tubular portions of said sealing elements being arranged between said first portion and said axial tabs.

5. The device according to claim 4, **characterized in that** said axial tabs have a substantially prism-like contour, with longitudinal wings that are suitable to deform elastically and act with slight interference within the corresponding hollow portion of the end portion.

6. The device according to one or more of claims 1 to 3, **characterized in that** said second portion comprises mutually opposite longitudinal tabs that protrude from said lateral wings and are suitable to form substantially C-shaped cross-sections within which the tubular portions of said ends of the sealing elements are inserted with minimal play in a longitudinal direction.

7. The device according to one or more of the preceding claims, **characterized in that** said sealing element comprises a tubular portion in which said body made of magnetic material is coextruded, lateral longitudinal protrusions extending therefrom opposite said sealing surface and forming abutments for corresponding recesses formed along the inner faces of a corresponding longitudinal seat, and a hollow portion that is suitable to provide an elastic support for said sealing element against the bottom of said seat.

8. The device according to one or more of claims 1 to 6, **characterized in that** said sealing element comprises a tubular portion within which a body made of magnetic material is coextruded, a hollow portion suitable to provide an elastic concertina element and a portion for interlocking coupling within said longitudinal seat protruding therefrom in succession opposite said sealing surface.
